# EUROPÄISCHE PATENTSCHRIFT

(11) **EP 0 575 379 B1**
(45) Veröffentlichungstag und Bekanntmachung des Hinweises auf die Patenterteilung: **11.12.1996**
(21) Anmeldenummer: 92905710.7
(22) Anmeldetag: 10.03.1992
(51) Int. Cl.: F16F 9/46

(54) **ZWEIROHR-STOSSDÄMPFER**
TWIN-TUBE SHOCK ABSORBER
AMORTISSEUR BITUBE

(30) Priorität: 13.03.1991 DE 4108026
(43) Veröffentlichungstag der Anmeldung: 29.12.1993
(73) Patentinhaber: ITT Automotive Europe GmbH, 60488 Frankfurt (DE)
(72) Erfinder: KIRCHER, Dieter, D-6368 Dortelweil (DE); BAYER, Ronald, D-6052 Mühlheim 2 (DE); HALAT, Siegfried, D-6000 Frankfurt am Main 70 (DE); PEREZ, Diogenes, D-6000 Frankfurt am Main 71 (DE); SPARSCHUH, Stefan, D-6051 Saulheim (DE)
(86) Internationale Anmeldenummer: EP9200519
(87) Internationale Veröffentlichungsnummer: WO9216771

(56) Entgegenhaltungen:
- WO-A-89/09891
- DE-A- 3 631 714
- US-A- 5 004 079

## Beschreibung

Die Erfindung betrifft einen Zweirohr-Stoßdämpfer mit regelbarer variabler Dämpfungskraft für Kraftfahrzeuge, bestehend aus einem Arbeitszylinder, dessen Innenraum mittels eines durch eine Kolbenstange verschiebbaren, Kolbens in eine erste sowie eine zweite Arbeitskammer unterteilt ist, einem teilweise mit Öl gefüllten Vorratsbehälter, mit hydraulischen Verbindungen, die einen Volumenausgleich zwischen den Arbeitskammern und dem Vorratsbehälter ermöglichen, einem ersten und einem zweiten Rückschlagventil, sowie einem elektromagnetisch betätigbaren Dämpferventil zur Änderung des Durchflußquerschnitts einer der hydraulischen Verbindungen, wobei das Dämpferventil einen Schließkörper aufweist, dessen Position in Abhängigkeit von der über dem Dämpferventil abfallenden hydraulischen Druckdifferenz, dem durch das Dämpferventil fließenden Volumenstrom sowie dem Ansteuerstrom der elektromagnetischen Betätigung bestimmt wird, und das zweite Rückschlagventil ein mit hydraulischen Kanälen versehenes, scheibenförmiges Teil aufweist.

Ein derartiger Zweirohr-Stoßdämpfer ist aus der internationalen Patentanmeldung WO 89/09891 bekannt. Das Besondere an diesem bekannten Zweirohr-Stoßdämpfer besteht darin, daß seine Dämpfungskraft ausschließlich mittels eines am unteren Ende des Zentralrohres angeordneten, zweistufigen regelbaren Dämpferventils vorgegeben wird, das in nur einer Richtung durchströmt wird. Die Vorsteuerstufe des Dämpferventils dient dabei lediglich der Ansteuerung der Hauptstufe, deren Schaltzustand die zu variierende Dämpfungskraft bestimmt.

Aus der DE-OS 36 31 714 ist ein Zweirohr-Stoßdämpfer bekannt, bei dem zur Dämpfungskraftverstellung zwei Bypaßverbindungen vorgesehen sind, die mittels zweier durch Hubmagneten betätigbarer Sitzventile gesteuert werden. Die erste Bypaßverbindung, die die oberhalb des Kolbens ausgebildete erste Arbeitskammer mit der unterhalb des Kolbens ausgebildeten zweiten Arbeitskammer verbindet, wird durch das erste, im Kolben angeordnete Sitzventil druckabhängig gesteuert, so daß zwei Dämpfungskraftkennlinien realisierbar sind. Die zweite Bypaßverbindung, die eine zusätzliche Strömungsverbindung zwischen der unteren Arbeitskammer und einem Vorratsbehälter bildet, wird durch das im Boden des Stoßdämpfers angeordnete zweite Sitzventil gesteuert, so daß eine zusätzliche dritte Dämpfungskraftverstellung erzielt werden kann.

Weniger vorteilhaft wird jedoch das dem bekannten Stoßdämpfer zugrundeliegende regelungstechnische Konzept empfunden, das davon ausgeht, daß das elektrische Stellsignal zur Ansteuerung des Dämpferventils proportional der gewünschten Dämpfungskraft ist. Dies resultiert aus dem Einsatz sogenannter Überdruckventile, die zu einer Kennlinienschar führen, mit der der für einen semiaktiven Stoßdämpfer erforderliche Arbeitsbereich nicht vollständig abgedeckt werden kann. Ein weiterer Nachteil wird außerdem darin gesehen, daß bei jedem Nulldurchgang der Kolbengeschwindigkeit eine sprunghafte Änderung der Dämpfungskraft stattfindet. Außerdem ist es nachteilig, daß zur Erzeugung einer bestimmten gewünschten Kennlinie während eines Stoßdämpferhubes die Ansteuerung der Vorsteuerstufe ständig geändert werden muß, die daher in hohem Maß zeitabhängig und deshalb nur mit erheblichen Aufwand realisierbar ist. Diese Tatsache hat zur Folge, daß jede Zeitverzögerung in der Ventilansteuerung sich sehr ungünstig auf den Fahrwerksregelungsprozeß auswirkt.

Es ist daher Aufgabe der vorliegenden Erfindung, einen Zweirohr-Stoßdämpfer der eingangs genannten Art anzugeben, der die vorstehend erwähnten Nachteile überwindet. Ferner soll ein Zweirohr-Stoßdämpfer angegeben werden, der ein Einstellen einer speziellen gewünschten Kennlinie, d.h. der Abhängigkeit der Dämpfungskraft von der Kolbengeschwindigkeit aus einem Feld möglicher Kennlinien ermöglicht, das sowohl progressive als auch degressive Kennlinien umfaßt. Gleichzeitig soll die Auffälligkeit des Stoßdämpfers gegen Ansteuerfehler eliminiert werden.

Diese Aufgabe wird erfindungsgemäß dadurch gelöst, daß das Dämpferventil als ein einstufiges Schieberventil ausgebildet ist, das aus einem am scheibenförmigen Teil axial anliegenden, einen Dichtsitz bildenden zylindrischen Führungsteil sowie einem auf dem Führungsteil geführten, elektromagnetisch betätigbaren Ventilschieber besteht.

Durch die erfindungsgemäßen Maßnahmen werden folgende Vorteile erreicht:

In dem für den Federungskomfort entscheidenden Bereich kleiner Dämpfergeschwindigkeiten und kleiner Dämpfungskräfte ist der erfindungsgemäße Stoßdämpfer feiner dosierbar.

Bei Ausfall der Ansteuerung bleibt der Dämpfer als passiver Dämpfer funktionsfähig. Durch geeignete konstruktive Maßnahmen kann eine der möglichen Kennlinien als die passive Kennlinie des Dämpfers bei Fehlen oder Ausfall der Ansteuerung voreingestellt werden.

Ein kennfeldgesteuerter Dämpfer ist im Gegensatz zum kraftgesteuerten Dämpfer tolerant gegen Fehlfunktionen der Ansteuerung, wie z.B. Signallaufzeiten oder Digitalisierungsfehler.

Durch eine geeignete Formgebung der Einzelkennlinien ist eine Änderung der Dämpferventilstellung nur bei einer Änderung der Anregungsverhältnisse (Fahrbahnwelligkeit oder Fahrsituation) notwendig; dagegen muß eine Kraft-Ansteuerung des Dämpfers auf jede Änderung der Dämpfergeschwindigkeit reagieren.

Die Vorteile der Kennfeldsteuerung sind unabhängig davon, ob ein Einrohrdämpfer oder ein Zweirohrdämpfer verwendet wird, ob die Dämpferventile im Dämpferkolben oder im Dämpferboden oder außerhalb des Dämpfers angebracht sind und ob ein oder mehrere bidirektionale Ventile verwendet werden oder ob der Ölstrom je nach Zug- oder Druckphase des Dämpfers von verschiedenen Ventilen beinflußt wird oder aber der Ölvolumenstrom gleichgerichtet und in beiden Phasen über dasselbe Ventil geleitet wird.

Der Ventilschieber ist dabei vorzugsweise hülsenförmig ausgebildet und bildet zusammmen mit einer darauf angeordneten Wicklung eine Tauchspule, die mit einem axial polarisierten Permanentmagneten zusammenwirkt. Ein derart konstruiertes Ventil weist aufgrund der Verwendung der Tauchspule ein günstiges dynamisches Verhalten auf.

Eine funktionswichtige günstige Bündelung der Kraftlinien des durch den Permanentmagneten erzeugten Magnetfeldes wird bei einer weiteren bevorzugten Ausführungsform der Erfindung dadurch erreicht, daß der Permanentmagnet zwischen einem Polschuh und einer am Boden des Stoßdämpfers anliegenden Bodenplatte angeordnet ist, wobei der als gelochte Scheibe ausgebildete Polschuh die Tauchspule aufnimmt und der Ventilschieber mit einer an der Bodenplatte sich abstützenden Feder zusammenwirkt.

Der Ventilschieber wird dabei durch die Feder in Richtung auf den Dichtsitz zu vorgespannt, so daß das Dämpferventil in unbestromtem Zustand der Spule geschlossen ist.

Eine andere Ausführungsvariante des Erfindungsgegenstandes sieht vor, daß der Ventilschieber mittels der Feder an der Bodenplatte gefesselt ist, so daß das Dämpferventil in unbestromtem Zustand der Wicklung teilweise geöffnet ist.

Bei einer weiteren vorteilhaften Ausgestaltung der Erfindung ist vorgesehen, daß der Ventilschieber eine Ringfläche aufweist, die mit dem im Zentralrohr herrschenden hydraulischen Druck beaufschlagt ist. Durch diese Maßnahme wird ermöglicht, daß die primär durch die Feder und den Magnetantrieb eingestellte Position des Ventilschiebers auch durch den am Dämpferventil abfallenden hydraulischen Druck beeinflußt werden kann.

Eine zweite erfindungsgemäße Lösung der gestellten Aufgabe, die insbesondere bei einem Stoßdämpfer sinnvoll ist, dessen Dämpferventil zweistufig ausgebildet ist und aus einer Vorsteuerstufe sowie einer Hauptstufe besteht, wobei der hydraulische Widerstand der Hauptstufe durch die am Dämpferventil abfallende Druckdifferenz sowie den Ansteuerstrom der elektromagnetischen Betätigung der Vorsteuerstufe bestimmt wird, besteht darin, daß sowohl die Vorsteuerstufe als auch die Hauptstufe als Schieberventile ausgebildet und getrennt vom zweiten Rückschlagventil in einem Ventilgehäuse angeordnet sind, wobei die Hauptstufe durch einen mindestens eine Steuerkante aufweisenden, mit im Ventilgehäuse ausgebildeten Abströmbohrungen zusammenwirkenden Hauptschieber und die Vorsteuerstufe durch einen mit im Ventilgehäuse ausgebildeten Steuerbohrungen zusammenwirkenden Steuerschieber gebildet sind. Durch die Größe und die geometrische Form der Abströmbohrungen läßt sich das Kennfeld der Hauptstufe beeinflussen.

Eine vorteilhafte Weiterbildung des mit dem zweistufigen Dämpferventil ausgestatteten erfindungsgemäßen Stoßdämpfers besteht darin, daß der Hauptschieber zwei Steuerkanten aufweist, wobei die erste Steuerkante durch die Schnittlinie einer den Hauptschieber begrenzenden Ringfläche mit seiner zylindrischen Oberfläche und die zweite Steuerkante durch die untere Begrenzung einer im Hauptschieber ausgebildeten radialen Ringnut gebildet ist, die mit dem Inneren des in seinem oberen Teil offenen Hauptschiebers über radiale Öffnungen verbunden ist, die mit axial unterhalb der Abströmbohrungen ausgebildeten zweiten Abströmbohrungen in Verbindung bringbar sind.

Die Ruheposition des Hauptschiebers wird bei einer weiteren Ausführungsvariante des Erfindungsgegenstandes dadurch erreicht, daß der Hauptschieber mittels einer ersten Druckfeder in Schließrichtung der Hauptstufe vorgespannt ist und am Ventilgehäuse gefesselt ist.

Bei einer weiteren vorteilhaften Ausgestaltung des erfindungsgemäßen Stoßdämpfers ist vorgesehen, daß der Hauptschieber mit Drosselbohrungen versehen ist, die einerseits in seinem Inneren und andererseits in einer durch den Hauptschieber im Ventilgehäuse begrenzten hydraulischen Kammer münden. Durch diese Maßnahme werden sowohl eine einwandfreie Ölversorgung der Vorsteuerstufe als auch funktionswichtige Druckverluste bei Durchströmung der Drosselbohrungen erreicht.

Eine besonders vorteilhafte Ausführung der Erfindung, deren Vorsteuerstufe durch eine mit einem Permanentmagneten zusammenwirkende Tauchspule elektromagnetisch betätigbar ist, besteht darin, daß der Steuerschieber durch einen im Ventilgehäuse geführten
zylindrischen Fortsatz des Tauchspulenträgers gebildet ist, der in Ruhestellung unter Vorspannung einer zweiten Druckfeder am Ventilgehäuse anliegt.

Gemäß einer weiteren bevorzugten Ausführungsvariante ist schließlich vorgesehen, daß die aus Tauchspule und Permanentmagnet bestehende Betätigungseinheit in einem mit dem Vorratsbehälter in Verbindung stehenden hydraulischen Raum angeordnet ist, so daß das durch das Ventilgehäuse hindurchragende Ende eines den Hauptschieber haltendes Fesselungselementes der Wirkung des im Vorratsbehälter herrschenden Druckes ausgesetzt ist.

Dadurch wird erreicht, daß auch die Tauchspule lediglich dem im Vorratsbehälter herrschenden Druck ausgesetzt ist, wobei gleichzeitig eine Wirkung einer nach unten gerichteten Kraft auf das Fesselungselement erzielt wird.

Weitere Einzelheiten, Merkmale und Vorteile der Erfindung gehen aus der nachfolgenden Beschreibung von zwei Ausführungsbeispielen unter Bezugnahme auf die beigefügte Zeichnung. Es zeigen:
- Fig. 1: eine erste bevorzugte Ausführungsform eines Zweirohr-Stoßdämpfers mit variabler Dämpfungskraft nach der Erfindung in einer Schnittdarstellung;
- Fig. 2: eine zweite Ausführungsform der Erfindung in der Fig. 1 entsprechenden Schnittdarstellung;
- Fig. 3: den unteren Bereich des in Fig. 1 gezeigten Zweirohr-Stoßdämpfers mit einem Dämpferventil im Schnitt in größerem Maßstab;
- Fig. 4: den unteren Bereich des in Fig. 2 gezeigten Zweirohr-Stoßdämpfers mit einem Dämpferventil im Schnitt in größerem Maßstab;

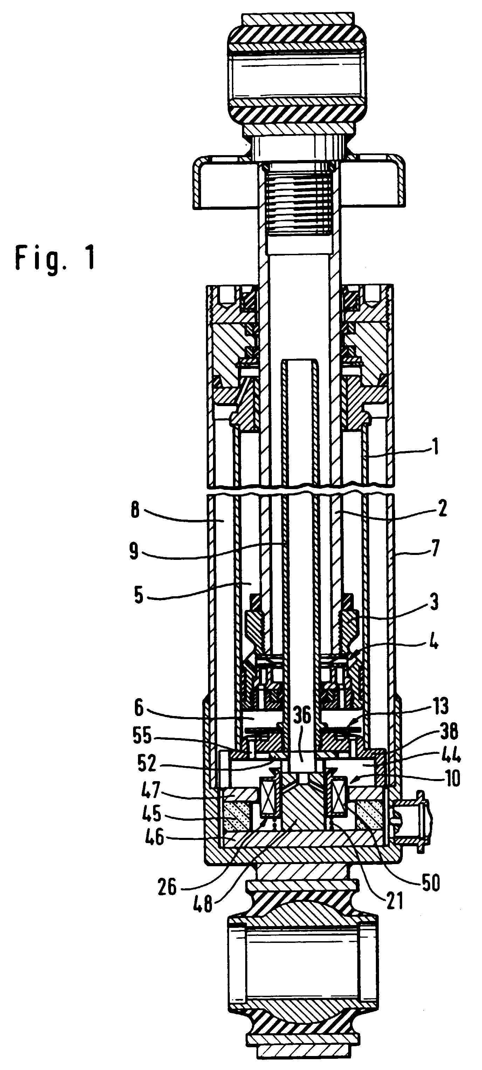

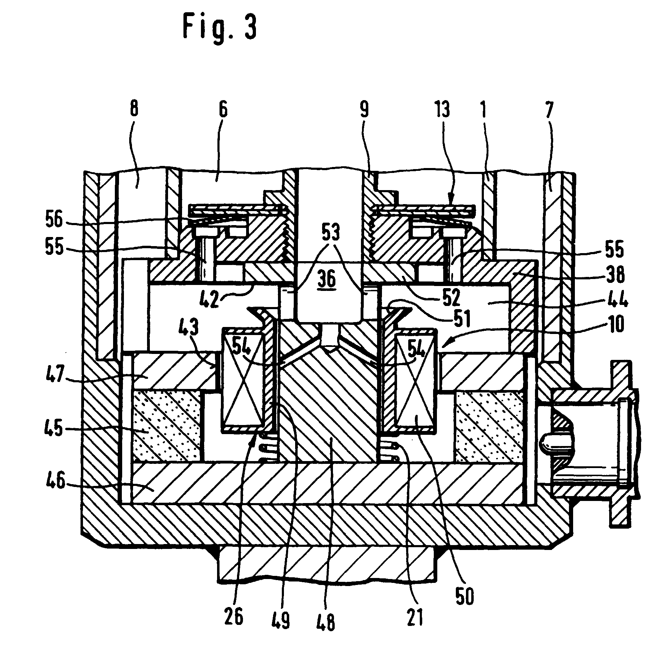

Der in Fig. 1 und 3 gezeigte Zweirohr-Stoßdämpfer nach der Erfindung weist einen hohlen Arbeitszylinder 1 sowie ein zum Arbeitszylinder 1 koaxial angeordnetes Außenrohr 7 auf, so daß dazwischen ein teilweise mit Öl gefüllter Vorratsbehälter 8 mit einem Kreisringquerschnitt gebildet wird. Der Innenraum des Arbeitszylinders 1 ist mittels eines durch eine rohrförmige Kolbenstange 2 verschiebbaren Kolbens 3 in eine oberhalb des Kolbens 3 ausgebildete erste Arbeitskammer 5 sowie eine unterhalb des Kolbens 3 ausgebildete zweite Arbeitskammer 6 unterteilt. Der Kolben 3 ist dabei mit einem ersten Rückschlagventil 4 versehen, dessen Aufgabe im nachfolgenden Text erläutert wird. In seinem mittleren Bereich wird der Kolben 3 von einem Zentralrohr 9 durchdrungen, das in die Kolbenstange 2 hineinragt und im Betrieb des Stoßdämpfers einen Volumenausgleich zwischen der ersten (5) bzw. zweiten Arbeitskammer 6 und dem Vorratsbehälter 8 ermöglicht.

Am unteren Ende des Zentralrohres 9 befinden sich sowohl ein zweites Rückschlagventil 13 als auch ein vorzugsweise einstufig ausgebildetes Dämpferventil 10, das zur Änderung des Durchflußquerschnitts der Verbindung zwischen dem Zentralrohr 9 und dem Vorratsbehälter 8 dient. Das zweite Rückschlagventil 13 besteht dabei aus einem am unteren Ende des Arbeitszylinders 1 angeordneten scheibenförmigem Teil 38, in dem axial verlaufende Bohrungen bzw. Kanäle 55 vorgesehen sind, die mit einer Federscheibe 56 zusammenwirken, die deren Schließen bzw. Öffnen ermöglicht. Das scheibenförmige Teil 38 begrenzt einen hydraulischen Ringraum 44, der mit dem Vorratsbehälter 8 in Verbindung steht.

Das Dämpferventil 10 weist ein am scheibenförmigen Teil 38 mit einem radialen Kragen 52 axial anliegendes zylindrisches Führungsteil 48 auf, wobei die untere Ringfläche des Kragens 52 einen Dichtsitz 42 bildet. Das in seinem oberen Teil mit einer mit dem Inneren des Zentralrohres 9 in Verbindung stehenden zylindrischen Ausnehmung 36 versehene Führungsteil 48 weist in diesem Bereich radiale Austrittsöffnungen 53 auf, die eine Verbindung zwischen der Ausnehmung 36 und dem mit hydraulischen Raum 44, d.h. zwischen dem Innenraum des Zentralrohres 9 und dem Vorratsbehälter 8 ermöglichen.

Auf dem Führungsteil 48 ist dabei ein elektromagnetisch betätigbarer Ventilschieber 49 axial verschiebbar geführt, der mit dem vorhin erwähnten Dichtsitz 42 zusammenwirkt und eine schräge Ringfläche 51 aufweist, die mit dem im Zentralrohrerinneren herrschenden hydraulischen Druck beaufschlagt ist. Der Ventilschieber 49 ist dabei vorzugsweise hülsenförmig ausgebildet und dient gleichzeitig als Träger einer Wicklung 50, mit der er eine Tauchspule 26 bildet, die mit einem axial polarisierten Permanentmagneten 45 zusammenwirkt. Der Permanentmagnet 45 befindet sich zwischen einer am Boden des Stoßdämpfers anliegenden Bodenplatte 46 sowie einem Polschuh 47, der eine die Tauchspule 26 aufnehmende Öffnung 43 aufweist. Bei der in Fig. 1 und 3 gezeigten Ausführung der Erfindung ist der Ventilschieber 49 mittels einer Feder 21 an der Bodenplatte 46 gefesselt, so daß er sich im Ruhezustand in einer Lage befindet, in der das Dämpferventil 10 teilweise geöffnet ist. Das Führungsteil 48 weist Schmierungsbohrungen 54 auf, so daß seine Oberfläche bzw. der Zwischenraum zwischen der Oberfläche und dem Ventilschieber 49 mit Öl versorgt werden kann. Denkbar ist selbstverständlich auch eine Ausführungsvariante, bei der die Feder 21 als Druckfeder ausgeführt ist, unter deren Vorspannung der Ventilschieber 49 am Dichtsitz 42 anliegt und die Austrittsöffnungen 53 verdeckt sind, so daß das Dämpferventil 10 geschlossen ist.

Der axial polarisierte Permanentmagent 45 erzeugt ein Magnetfeld, dessen durch den Polschuh 47 gebündelte Feldlinien die Wicklung 50 der Tauchspule 26 durchdringen und durch das Führungsteil 48 und die Bodenplatte 46 geschlossen werden. Über die am oberen Ende des Ventilschiebers 49 ausgebildete Ringfläche 51 kann der am Dämpferventil 10 abfallende hydraulische Druck die durch die Feder 21 und den Magnetantrieb 45,50 eingestellte Position des Ventilschiebers 49 beeinflussen. Durch das Verschieben des Ventilschiebers 49 werden die Austrittsöffnungen 53 mehr oder weniger verdeckt, wodurch der gewünschte hydraulische Widerstand des Dämpferventils 10 eingestellt wird. Die Gleichgewichtslage des Ventilschiebers 49 für Tauchspulenstrom Null kann durch nicht gezeigte Gegenfedern eingestellt werden, die der Feder 21 entgegenwirken und zweckmäßigerweise außerhalb der dargestellten Schnittebene zwischen den Austrittsöffnungen 53 angebracht werden.

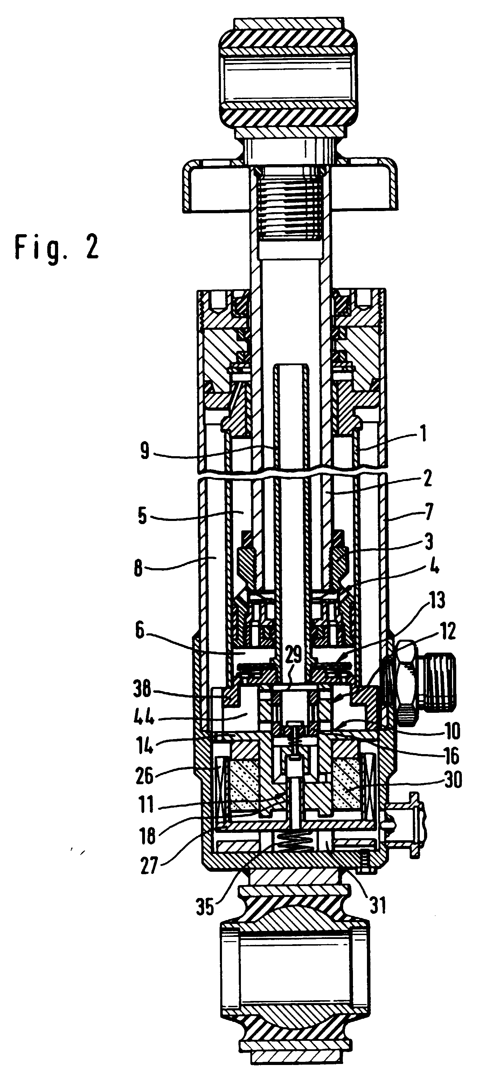

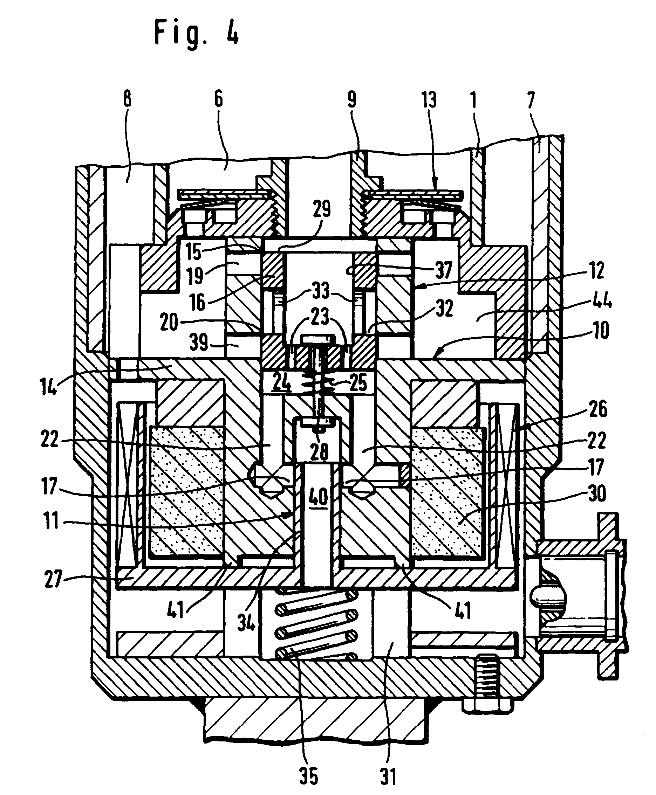

Bei der in Fig. 2 und 4 gezeigten Ausführungsform findet ein zweistufiges Dämpferventil 10 Verwendung, das aus einer elektromagnetisch betätigbaren Vorsteuerstufe 11 sowie einer Hauptstufe 12 besteht, deren Position im Betrieb durch die Vorsteuerstufe 11 mit beeinflußt wird.

Das Dämpferventil 10 besteht aus einem am scheibenförmigen Teil 38 axial anliegenden Ventilgehäuse 14, das sowohl die Vorsteuer- (11) als auch die Hauptstufe 12 aufnimmt. Die Hauptstufe 12 weist vorzugsweise einen im Ventilgehäuse 14 verschiebbar geführten Hauptschieber 16, der zwei Steuerkanten 15,20 aufweist, die mit im Ventilgehäuse 14 ausgebildeten, mit dem Vorratsbehälter 8 in Verbindung stehenden Abströmbohrungen 19,39 zusammenwirken. Die obere Steuerkante 15 wird dabei durch die Schnittlinie einer den Hauptschieber 16 begrenzenden Ringfläche 29 mit seiner Oberfläche gebildet, während die zweite Steuerkante 20 durch die Schnittlinie der unteren Flanke einer radialen Ringnut 32 mit der Oberfläche des Hauptschiebers 16 gebildet wird. Der Hauptschieber 16 ist dabei in seinem oberen Teil offen ausgebildet und weist ein zylindrische Ausnehmung 37 auf, wobei im Bereich der Ringnut 32 regelmäßig verteilte radiale Bohrungen 33 vorgesehen sind, die beim Öffnen der Hauptstufe 12 mit den unteren Abströmbohrungen 39 in Verbindung gebracht werden. In seiner Ruhelage wird der Hauptschieber 16 unter der Wirkung einer ersten Druckfeder 25 mittels eines Fesselungselementes 28 positioniert bzw. am Ventilgehäuse 14 so gefesselt, daß die Abströmbohrungen 19, 39 verdeckt sind und die Verbindung zwischen dem Zentralrohrinneren und dem hydraulischen Raum 44 bzw. dem Vorratsbehälter 8 unterbrochen ist. Der Hauptschieber 16 begrenzt im Ventilgehäuse 14 eine hydraulische Kammer 24, die über in seinem Boden vorgesehene Drosselbohrungen 23 mit dem Inneren des Zentralrohres 9 in Verbindung steht. In der hydraulischen Kammer 24 münden mehrere regelmäßig verteilte Steuerkanäle 22, an die radial verlaufende Steuerbohrungen 17 anschließen, die mit einem axial verschiebbaren Steuerschieber 18 zusammenwirken. Der Steuerschieber 18 ist mittels einer elektromagnetischen Betätigungseinheit betätigbar, die aus einer Tauchspule 26 sowie einem Permanentmagneten 30 besteht, wobei die Anordnung vorzugsweise derart getroffen ist, daß der Steuerschieber 18 durch einen axialen Fortsatz 34 des Tauchspulenträgers 27 gebildet ist, der mit einem Durchgang 40 versehen ist, der beim Öffnen der Steuerbohrungen 17 eine Verbindung zwischen der hydraulischen Kammer 24 und einem unterhalb der elektromagnetischen Betätigungseinheit ausgebildeten, mit Öl gefüllten hydraulischen Raum 31 ermöglicht, der seinerseits mit dem Vorratsbehälter 8 verbunden ist. In der Ruhestellung ist der Steuerschieber 18 in der Schließrichtung der Vorsteuerstufe 11 mittels einer Druckfeder 35 vorgespannt, so daß der Tauchspulenträger 27 an am Ventilkörper 14 ausgebildeten axialen Vorsprüngen 41 zur Anlage kommt. Der Ruhezustand der Dämpferventilanordnung ist in Fig. 4 dargestellt.

Durch eine hier nicht dargestellte, zwischen dem Spulenträger 27 und dem Ventilgehäuse 14 anbringbare Gegenfeder zur Feder 35 kann die Ruhelage der Vorsteuerstufe 11 auch auf eine teilweise geöffnete Position eingestellt werden.

Zur Ansteuerung des erfindungsgemäßen Zweirohr-Stoßdämpfers wird die Tauchspule 26 der elektromagnetischen Betätigungseinheit bestromt (Fig. 2). Die entstehende elektromagnetische Stellkraft bewirkt eine Bewegung des Steuerschiebers 18 nach unten, so daß eine Verbindung zwischen dem Vorratsbehälter 8 und dem Inneren des Zentralrohres 9 hergestellt wird. Bewegt sich nun der Kolben 3 in der sogenannten Zugstufe nach oben, so wird der in der Arbeitskammer 5 herrschende Druck höher als der Druck in der unterhalb des Kolbes 3 liegenden Arbeitskammer 6, während das erste Rückschlagventil 4 geschlossen bleibt. Dabei erfolgt ein Verdrängen des Öls aus der Kammer 5 durch die hohle Kolbenstange 2 ins Innere des Zentralrohres 9. Der am Hauptschieber 16 anstehende Systemdruck bewirkt bei offener Vorsteuerstufe 11 ein teilweises oder vollständiges Öffnen der Hauptstufe 12 auf Grund der zwischen dem Innenraum des Hauptschiebers 16 und der hydraulischen Kammer 24 auftretenden Druckdifferenz. Demnach strömt das Öl über den Ringraum 44 und Bohrungen bzw. Kanäle 55 im scheibenförmigen Teil 38 des zweites Rückschlagventils 13 in die unterhalb des Kolbens 3 liegende Arbeitskammer 6, die gleichzeitig aus dem Vorratsbehälter 8 nachgefüllt wird.

Bei einer Bewegung des Kolbens 3 nach unten in der sogenannten Druckstufe wird der in der unterhalb des Kolbens 3 liegenden Arbeitskammer 6 herrschende Druck höher als der Druck in der oberen Arbeitskammer 5, so daß das erste Rückschlagventil 4 geöffnet wird. Der aus der Arbeitskammer 6 austretende Volumenstrom wird geteilt, und zwar in einen ersten Teilstrom, der über das offene erste Rückschlagventil 4 direkt in die oberhalb des Kolbens 3 liegende Arbeitskammer 5 fließt, und einen zweiten Teilstrom, der durch die hohle Kolbenstange 2, das Zentralrohr 9 und das offene Dämpferventil 10 in den Vorratsbehällter 8 strömt.

Im Betrieb des erfindungsgemäßen Zweirohr-Stoßdämpfers kann zwischen zwei Betriebszuständen des Dämpferventils 10 unterschieden werden. Im ersten Betriebszustand, der einem unteren Kolbengeschwindigkeitsbereich entspricht, in dem niedrige Drücke und kleine Volumenströme auftreten, arbeitet das Dämpferventil 10 als einstufiges Schieberventil, dessen elektromagnetische Ansteuerung den Öffnungsgrad der Vorsteuerstufe 11 bestimmt.

Im zweiten Betriebszustand, der einem oberen Kolbengeschwindigkeitsbereich entspricht, in dem höhere Drücke und größere Volumenströme auftreten, wird der Steuerschieber 18 genauso wie im ersten Betriebszustand durch Bestromen der Tauchspule 26 positioniert, wobei seine Lage durch ein Gleichgewicht zwischen der Kraft der zweiten Druckfeder 35, der Stellkraft der Tauchspule 26, sowie den im Mündungsbereich der Steuerbohrungen 17 auftretenden hydrodynamischen Strömungskräften vorgegeben wird. Sind die Steuerbohrungen 17 geschlossen, so ist der unterhalb des Hauptschiebers 16 bzw. in der Kammer 24 herrschende Druck gleich dem Systemdruck, so daß die Hauptstufe 12 durch die Kraft der ersten Druckfeder 25 geschlossen bleibt. Werden die Steuerbohrungen 17 freigegeben, so entsteht durch einen Ölstrom durch die Drosselbohrungen 23 am Hauptschieber 16 eine Druckdifferenz, deren Wirkung auf den Hauptschieber 16 eine Kraft wirksam werden läßt, die die Federkraft der ersten Druckfeder 25 überwindet, so daß eine Bewegung des Hauptschiebers 16 nach unten erfolgt und die Steuerkanten 15,20 bzw. die Abströmbohrungen 19,39 freigegeben werden. Durch das Abströmen des aus dem zentralrohr austretenden Öls über die offenen Abströmbohrungen 19,39 wird der Systemdruck soweit abgebaut, bis sich eine neue Gleichgewichtslage des Hauptschiebers 16 einstellt, die wesentlich durch die Position des Steuerschiebers 18 mitbestimmt wird.

Die zur Bewegung des Hauptschiebers 16 benötigte Stellenergie wird dabei der zu drosselnden Strömung entnommen. Im oberen Arbeitsbereich arbeitet das Dämpferventil 10 als zweistufiges Druckregelventil, wobei die elektromagnetische Ansteuerung die Höhe des Differenzdruckes am Hauptschieber 16 bestimmt.

Im unteren Arbeitsbereich dagegen wirkt das Dämpferventil 10 als Drosselventil, dessen hydraulische Durchlässigkeit nach Maßgabe der Ansteuerung vorgegeben wird.

Durch die geeignete Dimensionierung der Bauteile kann die Art des kontinuierlichen Übergangs zwischen diesen Arbeitsbereichen gestaltet werden und es können nahezu beliebige Kennlinienscharen als Dämpferventilcharakteristik erzeugt werden. Insbesondere ist dadurch ein weiches Anlaufen der Ventilkennlinien im unteren Arbeitsbereich möglich, was bei Anwendung in steuerbaren Fahrzeugdämpfern einer komfortbetonten Dämpferstellung entspricht. Im oberen Arbeitsbereich wird die Degressivität der Kennlinien im Wesentlichen durch die Querschnittsfläche des Fesselungselementes 28 bestimmt.

## Patentansprüche

1. Zweirohr-Stoßdämpfer mit regelbarer variabler Dämpfungskraft für Kraftfahrzeuge, bestehend aus einem Arbeitszylinder (1), dessen Innenraum mittels eines durch eine Kolbenstange (2) verschiebbaren Kolbens (3) in eine erste (5) sowie eine zweite Arbeitskammer (6) unterteilt ist, einem teilweise mit Öl gefüllten Vorratsbehälter (8), mit hydraulischen Verbindungen, die einen Volumenausgleich zwischen den Arbeitskammern (5,6) und dem Vorratsbehälter (8) ermöglichen, einem ersten (4) und einem zweiten Rückschlagventil (13), sowie einem elektromagnetisch betätigbaren Dämpferventil (10) zur Änderung des Durchflußquerschnitts einer der hydraulischen Verbindungen, wobei das Dämpferventil (10) einen Schließkörper (49) aufweist, dessen Position in Abhängigkeit von der über dem Dämpferventil (10) abfallenden hydraulischen Druckdifferenz, dem durch das Dämpferventil (10) fließenden Volumenstrom sowie dem Ansteuerstrom der elektromagnetischen Betätigung ( 45,46,47,49,50) bestimmt wird, und das zweite Rückschlagventil (13) ein mit hydraulischen Kanälen (55) versehenes, scheibenförmiges Teil (38) aufweist, dadurch **gekennzeichnet**, daß das Dämpferventil (10) als ein einstufiges Schieberventil ausgebildet ist, das aus einem am scheibenförmigen Teil (38) axial anliegenden, einen Dichtsitz (42) bildenden zylindrischen Führungsteil (48) sowie einem auf dem Führungsteil (48) geführten, elektromagnetisch betätigbaren Ventilschieber (49) besteht.

2. Zweirohr-Stoßdämpfer mit mit regelbarer variabler Dämpfungskraft für Kraftfahrzeuge, bestehend aus einem Arbeitszylinder (1), dessen Innenraum mittels eines durch eine Kolbenstange (2) verschiebbaren Kolbens (3) in eine erste (5) sowie eine zweite Arbeitskammer (6) unterteilt ist, einem teilweise mit Öl gefüllten Vorratsbehälter(8), mit hydraulischen Verbindungen, die einen Volumenausgleich zwischen den Arbeitskammern (5,6) und dem Vorratsbehälter (8) ermöglichen, einem ersten (4) und einem zweiten Rückschlagventil (13), sowie einem elektromagnetisch betätigbaren Dämpferventil (10) zur Änderung des Durchflußquerschnitts einer der hydraulischen Verbindungen, wobei das Dämpferventil (10) zweistufig ausgebildet ist und aus einer Vorsteuerstufe (11) sowie einer Hauptstufe (12) besteht und wobei der hydraulische Widerstand der Hauptstufe (12) durch die über dem Dämpferventil (10) abfallende Druckdifferenz sowie den Ansteuerstrom der elektromagnetischen Betätigung der Vorsteuerstufe (11) bestimmt wird, dadurch **gekennzeichnet**, daß sowohl die Vorsteuerstufe (11) als auch die Hauptstufe (12) als Schieberventile ausgebildet und getrennt vom zweiten Rückschlagventil (13) in einem Ventilgehäuse (14) angeordnet sind, wobei die Hauptstufe (12) durch einen mindestens eine Steuerkante (15) aufweisenden, mit im Ventilgehäuse (14) ausgebildeten Abströmbohrungen (19) zusammenwirkenden Hauptschieber (16) und die Vorsteuerstufe (11) durch einen mit im Ventilgehäuse (14) ausgebildeten Steuerbohrungen (17) zusammenwirkenden Steuerschieber (18) gebildet sind.

3. Zweirohr-Stoßdämpfer nach Anspruch 1, dadurch **gekennzeichnet**, daß der Ventilschieber (49) hülsenförmig ausgebildet und zusammmen mit einer darauf angeordneten Wicklung (50) eine Tauchspule (26) bildet, die mit einem axial polarisierten Permanentmagneten (45) zusammenwirkt.

4. Zweirohr-Stoßdämpfer nach Anspruch 3, dadurch **gekennzeichnet**, daß der Permanentmagnet (45) zwischen einem Polschuh (47) und einer am Boden des Stoßdämpfers anliegenden Bodenplatte (46) angeordnet ist, wobei der Polschuh (47) eine die Tauchspule (49,50) aufnehmende Öffnung (43) aufweist und der Ventilschieber (49) mit einer an der Bodenplatte (46) sich abstützenden Feder (21) zusammenwirkt.

5. Zweirohr-Stoßdämpfer nach Anspruch 4, dadurch **gekennzeichnet**, daß der Ventilschieber (49) durch die Feder (21) auf den Dichtsitz (42) zu vorgespannt ist, so daß das Dämpferventil (10) in unbestromtem Zustand der Wicklung (50) geschlossen ist.

6. Zweirohr-Stoßdämpfer nach Anspruch 4, dadurch **gekennzeichnet**, daß der Ventilschieber (49) mittels der Feder (21) an der Bodenplatte (46) gefesselt ist, so daß das Dämpferventil (10) in unbestromtem Zustand der Wicklung (50) teilweise geöffnet ist.

7. Zweirohr-Stoßdämpfer nach einem der vorhergehenden Ansprüche 1 oder 3 bis 6, dadurch **gekennzeichnet**, daß der Ventilschieber (49) eine Ringfläche (51) aufweist, die mit dem im Zentralrohr (9) herrschenden hydraulischen Druck beaufschlagbar ist.

8. Zweirohr-Stoßdämpfer nach Anspruch 1, dadurch **gekennzeichnet**, daß das Führungsteil (48) Schmierungsbohrungen (54) aufweist.

9. Zweirohr-Stoßdämpfer nach Anspruch 2, dadurch **gekennzeichnet**, daß der Hauptschieber (16) zwei Steuerkanten (15,20) aufweist, wobei die erste Steuerkante (15) durch die Schnittlinie einer den Hauptschieber (16) begrenzenden Ringfläche (29) mit seiner zylindrischen Oberfläche und die zweite Steuerkante (20) durch die untere Begrenzung einer im Hauptschieber (16) ausgebildeten radialen Ringnut (32) gebildet ist, die mit dem Inneren des in seinem oberen Teil offenen Hauptschiebers (16) über radiale Öffnungen (33) verbunden ist, die mit axial unterhalb der Abströmbohrungen (19) ausgebildeten zweiten Abströmbohrungen (39) in Verbindung bringbar sind.

10. Zweirohr-Stoßdämpfer nach Anspruch 2 oder 9, dadurch **gekennzeichnet**, daß der Hauptschieber (16) mittels einer ersten Druckfeder (25) in Schließrichtung der Hauptstufe (12) vorgespannt ist und am Ventilgehäuse (14) gefesselt ist.

11. Zweirohr-Stoßdämpfer nach Anspruch 2, dadurch **gekennzeichnet**, daß der Hauptschieber (16) mit Drosselbohrungen (23) versehen ist, die einerseits in seinem Inneren und andererseits in einer durch den Hauptschieber (16) im Ventilgehäuse (14) begrenzten hydraulischen Kammer (24) münden.

12. Zweirohr-Stoßdämpfer nach Anspruch 2, wobei die Vorsteuerstufe durch eine mit einem Permanentmagneten zusammenwirkende Tauchspule elektromagnetisch betätigbar ist, dadurch **gekennzeichnet**, daß der Steuerschieber (18) durch einen im Ventilgehäuse (14) geführten zylindrischen Fortsatz (34) des Tauchspulenträgers (27) gebildet ist, der in Ruhestellung unter Vorspannung einer zweiten Druckfeder (35) am Ventilgehäuse (14) anliegt.

13. Zweirohr-Stoßdämpfer nach Anspruch 2, dadurch **gekennzeichnet**, daß zwischen dem Spulenträger (27) und dem Ventilgehäuse (14) eine dritte Feder angeordnet ist, durch deren Wirkung die Vorsteuerstufe (11) in unbestromtem Zustand der Tauchspule (26) teilweise geöffnet ist.

14. Zweirohr-Stoßdämpfer nach Anspruch 12 oder 13, dadurch **gekennzeichnet**, daß die aus Tauchspule (26) und Permanentmagneten (30) bestehende Betätigungseinheit in einem mit dem Vorratsbehälter (8) in Verbindung stehenden hydraulischen Raum (31) angeordnet ist, so daß das durch das Ventilgehäuse (14) hindurchragende Ende eines den Hauptschieber (16) haltendes Fesselungselementes (28) der Wirkung des im Vorratsbehälter (8) herrschenden Druckes ausgesetzt ist.

## Claims

1. A two-tube shock absorber with controllable variable shock absorbing power for automotive vehicles, comprising: a power cylinder (1) having an interior space subdivided into a first (5) and a second (6) power chamber by means of a piston (3) slidable by a piston rod (2), a storage tank (8), partly filled with oil, having hydraulic connections which provide a balance of volume between the power chambers (5, 6) and the storage tank (8), a first (4) and a second non-return valve (13), and an electromagnetically actuatable shock absorber valve (10) for the variation of the cross-sectional area of flow of one of the hydraulic connections, wherein the shock absorber valve (10) includes a closure member (49), the position of which is determined in dependence on the hydraulic pressure differential declining across the shock absorber valve (10), the volumetric stream which flows through the shock absorber valve (10) and the actuating current of an electromagnetic actuating unit (45, 46, 47, 49, 50), and wherein the second non-return valve (13) has a disc-shaped element (38) provided with hydraulic ducts (55),
**characterized** in that the shock absorber valve (10) is configured in the shape of a single-stage slide valve including a cylindrical guide element (48) which is axially abutted against the disc-shaped element (38) and forms a sealing seat (42), and a valve slide (49) which is guided on the guide element (48) and is electromagnetically actuatable.

2. A two-tube shock absorber with controllable variable shock absorbing power for automotive vehicles, comprising: a power cylinder (1) having an interior space subdivided into a first (5) and a second (6) power chamber by means of a piston (3) slidable by a piston rod (2), a storage tank (8), partly filled with oil, having hydraulic connections which provide a balance of volume between the power chambers (5, 6) and the storage tank (8), a first (4) and a second non-return valve (13), and an electromagnetically actuatable shock absorber valve (10) for the variation of the cross-sectional area of flow of one of the hydraulic connections, wherein the shock absorber valve (10) is provided two-stage and has a pilot control stage (11) and a main stage (12), the hydraulic resistance of the main stage (12) being determined by the pressure differential which decreases above the shock absorber valve (10) and the actuating current of the electromagnetic actuation of the pilot control stage (11),
**characterized** in that both the pilot control stage (11) and the main stage (12) are configured in the shape of slide valves and arranged in a valve housing (14) separately of the second non-return valve (13), the main stage (12) being formed of a main slide valve (16) which is provided with at least one control edge (15) and interacts with flow-off bores (19) configured in the valve housing (14), and the pilot control stage (11) being formed of a control slide valve (18) which interacts with control bores (17) provided in the valve housing (14).

3. A two-tube shock absorber as claimed in claim 1,
**characterized** in that the valve slide (49) is configured sleeve-shaped and jointly with a winding (50) which is arranged on the valve slide forms a plunger coil (26) which interacts with an axially polarized permanent magnet (45).

4. A two-tube shock absorber as claimed in claim 3,
**characterized** in that the permanent magnet (45) is arranged between a pole shoe (47) and a baseplate (46) abutted against the bottom of the shock absorber, the pole shoe (47) being formed with an opening (43) which accommodates the plunger coil (49, 50) and the valve slide (49) interacting with a spring (21) which is supported on the baseplate (46).

5. A two-tube shock absorber as claimed in claim 4,
**characterized** in that the valve slide (49) is prestressed by the spring (21) in the direction of the sealing seat (42) so that the shock absorber valve (10) is closed in the de-energized condition of the winding (50).

6. A two-tube shock absorber as claimed in claim 4,
**characterized** in that the valve slide (49) is fixed to the baseplate (46) by means of the spring (21) so that the shock absorber valve (10) is partly opened in the de-energized condition of the winding (50).

7. A two-tube shock absorber as claimed in anyone of the preceding claims 1 or 3 to 6,
**characterized** in that the valve slide (49) has an annular surface (51) which is subjectible to the hydraulic pressure existing within the central tube (9).

8. A two-tube shock absorber as claimed in claim 1,
**characterized** in that the guide element (48) has lubricating bores (54).

9. A two-tube shock absorber as claimed in claim 2,
**characterized** in that the main slide valve (16) has two control edges (15, 20), the first control edge (15) being defined by the line of intersection of an annular surface (29) defining the main slide valve (16) with the latter's cylindrical surface and the second control edge (20) being defined by the lower boundary of a radial annular groove (32) which is configured in the main slide valve (16) and is in connection with the interior space of the main slide valve (16) being open-type in its upper portion through radial openings (33) permitting a connection to be established with second flow-off bores (39) being configured axially beneath the flow-off bores (19).

10. A two-tube shock absorber as claimed in claim 2 or 9,
**characterized** in that the main slide valve (16) is prestressed by a first compression spring (25) in the closing direction of the main stage (12) and is fixed to the valve housing (14).

11. A two-stage shock absorber as claimed in claim 2,
**characterized** in that the main slide valve (16) is formed with restricting bores (23) which end up, on one side, in its interior space and, on the other side, in a hydraulic chamber (24) which is defined by the main slide valve (16) within the valve housing (14).

12. A two-tube shock absorber as claimed in claim 2, the pilot control stage being actuatable electromagnetically by a plunger coil interacting with a permanent magnet,
**characterized** in that the control slide valve (18) is formed of a cylindrical extension (34) of the plunger coil support (27) guided within the valve housing (14), which cylindrical extension is abutted under the prestressing action of a second compression spring (35) against the valve housing (14) in the position of rest.

13. A two-tube shock absorber as claimed in claim 2,
**characterized** in that between the coil support (27) and the valve housing (14) a third spring is positioned, through the action of which the pilot control stage (11) is partly opened in the de-energized condition of the plunger coil (26).

14. A two-tube shock absorber as claimed in claim 12 or in claim 13,
**characterized** in that the actuating unit including the plunger coil (26) and the permanent magnet (30) is arranged within a hydraulic chamber (31) which is in connection with the storage tank (8) so that the end of a captivating element (28) which retains the main slide valve (16) and projects through the entire valve housing (14) is subjected to the effect of the pressure existing in the storage tank (8).

## Revendications

1. Amortisseur bitube à force d'amortissement variable réglable, pour véhicule automobile, constitué d'un cylindre de travail (1), dont la cavité est divisée en une première chambre de travail (5) et une seconde chambre de travail (6) par un piston (3) agencé de façon à pouvoir être déplacé au moyen d'une tige de piston (2), d'un réservoir de stockage (8), rempli partiellement d'huile et comportant des liaisons hydrauliques qui permettent une compensation de volume entre les chambres de travail (5, 6) et le réservoir de stockage (8), d'une première (4) et une seconde (13) valves antiretour et d'une valve d'amortisseur (10) à actionnement électromagnétique qui sert à modifier la section transversale de passage de l'une des liaisons hydrauliques, la valve d'amortisseur (10) comportant un obturateur (49) dont la position est déterminée en fonction de la différence de pression hydraulique entre les deux côtés de la valve d'amortisseur (10), du débit volumique passant par la valve d'amortisseur (10) et du courant de commande des moyens d'actionnement électromagnétique (45, 46, 47, 49, 50), tandis que la seconde valve antiretour (13) comporte une partie (38) en forme de disque qui comporte des conduits hydrauliques (55), caractérisé en ce que la valve d'amortisseur (10) est réalisée sous forme d'une valve à glissement à un seul étage qui est constituée d'une pièce de guidage (48) cylindrique, qui constitue un siège d'étanchéité (42) et qui prend appui axialement sur la partie (38) en forme de disque, et d'un obturateur de valve glissant (49) à actionnement électromagnétique qui est guidé sur la pièce de guidage (48).

2. Amortisseur bitube à force d'amortissement variable réglable, pour véhicule automobile, constitué d'un cylindre de travail (1), dont la cavité est divisée en une première chambre de travail (5) et une seconde chambre de travail (6) par un piston (3) agencé de façon à pouvoir être déplacé au moyen d'une tige de piston (2), d'un réservoir de stockage (8), rempli partiellement d'huile et comportant des liaisons hydrauliques qui permettent une compensation de volume entre les chambres de travail (5, 6) et le réservoir de stockage (8), d'une première (4) et une seconde (13) valves antiretour et d'une valve d'amortisseur (10) à actionnement électromagnétique qui sert à modifier la section transversale de passage de l'une des liaisons hydrauliques, tandis que la valve d'amortisseur (10) est réalisée sous forme d'une valve à deux étages et est constituée d'un étage pilote (11) et d'un étage principal (12), la résistance hydraulique de l'étage principal (12) étant déterminée par la différence de pression entre les deux côtés de la valve d'amortisseur (10) et par le courant de commande des moyens d'actionnement électromagnétique de l'étage pilote (11), caractérisé en ce que l'étage pilote (11) et l'étage principal (12) sont réalisés l'un et l'autre sous forme de valves à glissement et sont disposés, d'une manière séparée vis-à-vis de la seconde valve antiretour (13), dans un boîtier de valve (14), l'étage principal (12) étant formé d'un obturateur glissant principal (16) qui comporte au moins un bord de commande (15) et qui coopère avec des perçages d'écoulement de sortie (19) pratiqués dans le boîtier de valve (14), tandis que l'étage pilote (11) est formé d'un obturateur glissant de commande (18) qui coopère avec des perçages de commande (17) pratiqués dans le boîtier de valve (14).

3. Amortisseur bitube suivant la revendication 1, caractérisé en ce que l'obturateur de valve glissant (49) est réalisé en forme de manchon et constitue, avec un enroulement (50) disposé sur cet obturateur glissant, une bobine mobile (26) qui coopère avec un aimant permanent (45) à polarisation axiale.

4. Amortisseur bitube selon la revendication 3, caractérisé en ce que l'aimant permanent (45) est disposé entre une pièce polaire (47) et une plaque de fond (46) qui prend appui sur le fond de l'amortisseur, la pièce polaire (47) comportant une ouverture (43) qui reçoit la bobine mobile (49, 50), tandis que l'obturateur de valve glissant (49) coopère avec un ressort (21) qui prend appui sur la plaque de fond (46).

5. Amortisseur bitube suivant la revendication 4, caractérisé en ce que l'obturateur de valve glissant (49) est soumis de la part du ressort (21) à une précontrainte en direction du siège d'étanchéité (42), de sorte qu'en l'absence de courant dans l'enroulement (50), la valve d'amortisseur (10) est fermée.

6. Amortisseur bitube suivant la revendication 4, caractérisé en ce que l'obturateur de valve glissant (49) est rendu solidaire de la plaque de fond (46) au moyen du ressort (21), de sorte qu'en l'absence de courant dans l'enroulement (50), la valve d'amortisseur (10) est partiellement ouverte.

7. Amortisseur bitube suivant l'une des revendications précédentes 1 ou 3 à 6, caractérisé en ce que l'obturateur de valve glissant (49) présente une surface annulaire (61) qui peut être soumise à l'action de la pression hydraulique régnant dans le tube central (9).

8. Amortisseur bitube suivant la revendication 1, caractérisé en ce que la pièce de guidage (48) comporte des perçages de lubrification (54).

9. Amortisseur bitube suivant la revendication 2, caractérisé en ce que l'obturateur glissant principal (16) comporte deux bords de commande (15, 20), le premier bord de commande (15) étant formé par la ligne d'intersection d'une surface annulaire (29), qui délimite l'obturateur glissant principal (16), avec la surface cylindrique de cet obturateur glissant, tandis que le second bord de commande (20) est formé par la limite inférieure d'une gorge annulaire radiale (32) qui est pratiquée dans l'obturateur glissant principal (16) et qui communique avec l'intérieur de l'obturateur glissant principal (16), ouvert à sa partie supérieure, par l'intermédiaire d'orifices radiaux (33) qui peuvent être amenés en communication avec des seconds perçages d'écoulement de sortie (39) pratiqués au-dessous des perçages d'écoulement de sortie (19) suivant la direction axiale.

10. Amortisseur bitube suivant la revendication 2 ou 9, caractérisé en ce que l'obturateur glissant principal (16) est soumis de la part d'un premier ressort de compression (25) à une précontrainte suivant la direction de fermeture de l'étage principal (12) et est rendu solidaire du boîtier de valve (14)au moyen de ce ressort.

11. Amortisseur bitube suivant la revendication 2, caractérisé en ce que l'obturateur glissant principal (16) est pourvu de perçages d'étranglement (23) qui débouchent d'une part à l'intérieur de cet obturateur glissant et d'autre part dans une chambre hydraulique (24) qui est délimitée dans le boîtier de valve (14) par l'obturateur glissant principal (16), Cet agencement permet d'obtenir à la fois une alimentation parfaite de l'étage pilote en huile et des pertes de charge au passage par les perçages d'étranglement qui sont importantes en ce qui concerne le fonctionnement.

12. Amortisseur bitube suivant la revendication 2, dans lequel l'étage pilote est agencé de façon à pouvoir être soumis à un actionnement électromagnétique au moyen d'une bobine mobile qui coopère avec un aimant permanent, caractérisé en ce que l'obturateur glissant de commande (18) est formé d'une partie de prolongement cylindrique (34) du support de bobine mobile (27) qui est guidé dans le boîtier de valve (14) et qui, dans la position de repos, prend appui sur le boîtier de valve (14) sous l'effet de la précontrainte fournie par un second ressort de compression (35).

13. Amortisseur bitube suivant la revendication 2, caractérisé en ce qu'entre le support de bobine (27) et le boîtier de valve (14), il est prévu un troisième ressort sous l'action duquel l'étage pilote (11) est partiellement ouvert en l'absence de courant dans la bobine mobile (26).

14. Amortisseur bitube suivant la revendication 12 ou 13, caractérisé en ce que l'unité d'actionnement constituée de la bobine mobile (26) et de l'aimant permanent (30) est disposée dans une chambre hydraulique (31) qui communique avec le réservoir de stockage (8), d'une façon telle que l'extrémité d'un élément de solidarisation (28) maintenant l'obturateur glissant principal (16), extrémité qui traverse le boîtier de valve (14), est soumise à l'action de la pression régnant dans le réservoir de stockage (8).
